# EUROPEAN PATENT APPLICATION

(11) **EP 0 554 952 A1**
(43) Date of publication of application: **11.08.1993**
(21) Application number: 93200261.1
(22) Date of filing: 02.02.1993
(51) Int. Cl.: G01L 1/14, G01B 7/16

(54) **Extensometer**

(30) Priority: 06.02.1992 NL 9200221
(71) Applicant: PEEKEL INSTRUMENTS B.V., NL-3044 AS Rotterdam (NL)
(72) Inventor: Bergsma, Dirk, NL-3204 GC Spijkenisse (NL)
(74) Representative: Hoijtink, Reinoud

(57) **Abstract**

In order to measure weight changes in a reservoir one of the supporting bodies is connected to a sensor for measuring changes in length. The sensor contains a movement guide (13) which is coupled to a housing part (11) and which bears a magnetic core (15). The core is placed in a wound tube (14). The winding forms part of a Wheatstone bridge. The movement guide (13) is connected to the other housing part (12) over a membrane (16) and a disc (18). To compensate temperature differences the movement guide (13), the membranes (16, 17), the discs (18, 19) and the tube (14) are of the same material. The housing parts (11, 12) are of the same material as the supporting body.

## Description

The invention relates to a sensor for determining the weight of the content of a reservoir by measuring the change in length of a supporting body thereof, comprising a rod-like movement guide, the end portions of which are each fixed in a housing part, means for coupling each housing part in lengthwise direction to the supporting body, a wound tube which is placed around a part of the movement guide located in one of the housing parts and which forms part of a Wheatstone bridge, means for measuring a disturbance of the bridge balance and connecting means for connecting the movement guide to the housing part containing the tube.

Strain gauges are usually used for measuring changes in length. The inaccuracy of the measurement increases greatly as a result of external influences, particularly in the case of very small measurement ranges.

The invention has for its object to offer a solution herefor.

According to the invention this is achieved in that the movement guide, the tube and the connecting means are manufactured of the same material and the housing parts and the supporting body are of the same material.

Achieved according to the invention is that the influence of temperature, which results in a change in length of the object for measuring, is fully compensated because a corresponding change in length takes place in the sensor itself.

The movement guide is preferably connected to the housing part by two membranes, one of which is connected to a connecting disc.

This step enables a free choice of the other materials.

The invention is further elucidated with reference to the drawings.

In the drawings:
Fig. 1 shows a view of a silo which is supported by four posts,
Fig. 2 shows a perspective view, partially in section, of a sensor according to the invention in a position attached to a post of the silo.

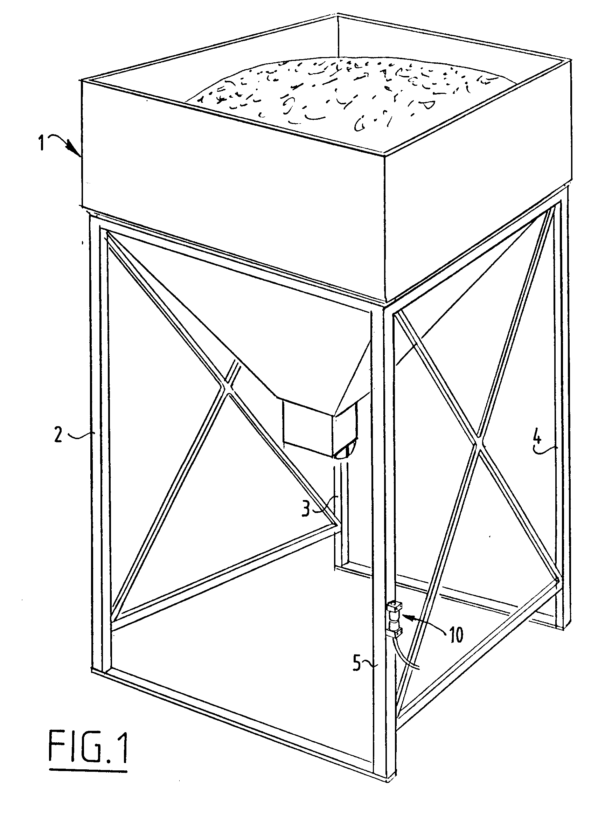

Fig. 1 shows a silo 1 which is placed on four posts 2, 3, 4 and 5. The posts are compressed to a greater or lesser extent depending on the weight in the silo. As the weight decreases a lengthening takes place as a result of the resilience of the material of the posts, while with a greater weight a length decrease takes place due to compression.

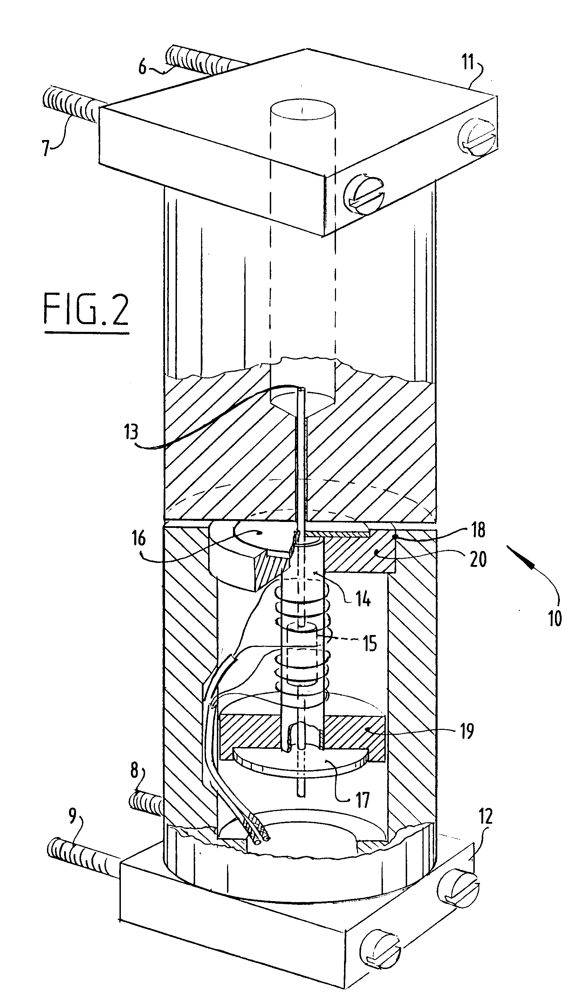

In order to measure the change in length and therefore the weight of the silo use can be made according to the invention of a sensor 10 as according to fig. 2.

The sensor is fastened by means of four bolts 6, 7, 8 and 9 to the post, for example the post 5. The sensor comprises an upper housing part 11 and a lower housing part 12. Fixedly connected to the one housing part is a movement guide 13 which is enclosed in the other housing part 12 by a tube 14 while in addition a piece of soft iron 15 is arranged. Wiring which leads to a Wheatstone bridge (not shown) is wound round the tube 14. The movement guide is fixed in the housing part 12 to two thin, plate-like membranes 16 and 17 respectively. The membrane is fixed in housing part 12 with interposition of the disc-shaped connecting element 18 which is fixed to housing part 12 by means of clamping and/or glueing. The bottom membrane is further connected to the disc-shaped element 19 which can move freely in lengthwise direction in housing part 12.

When there is a change in length of the post the housing parts 11 and 12 displace relative to each other. The movement guide 13 moves with housing part 11, wherein a deflection of the membrane 16 and 17 takes place. Due to this displacement, and therefore the displacement of the soft iron core 15, the bridge balance of the Wheatstone bridge is disturbed, which is a measure for the extent of the length change in the post on which the sensor is mounted.

According to the invention the influences of temperature variations, which also result of course in a change in length of the post, are compensated because the choice of material for the movement guide 13, connecting discs 18 and 19 and the membranes 16 and 17 in addition to that for the tube 14 is the same, with the understanding that the coefficient of expansion of the materials is the same. Because the movement guide is fixed at one point relative to the housing part 12, the lower housing part can move freely during changes in temperature, wherein the core 15 remains in the same relative position with respect to the tube 14 carrying the winding. In addition, the housing parts 11 and 12 are of the same material as the posts so that temperature differences have no influence on the measurement. Because this disturbing influence is eliminated in this manner, a reliable measurement can still be ensured despite the small changes in length due to weight variations in a silo.

## Claims

1. Sensor for determining the weight of the content of a reservoir by measuring the change in length of a supporting body thereof, comprising a rod-like movement guide, the end portions of which are each fixed in a housing part, means for coupling each housing part in lengthwise direction to the supporting body, a wound tube which is placed around a part of the movement guide located in one of the housing parts and which forms part of a Wheatstone bridge, means for measuring a disturbance in the bridge balance and connecting means for connecting the movement guide to the housing part containing the tube, **characterized in that** the movement guide, the tube and the connecting means are manufactured of the same material and that the housing parts and the supporting body are of the same material.

2. Sensor as claimed in claim 1, **characterized in that** the connecting means consist of two membranes, one of which is connected to the housing part over a connecting disc.

3. Sensor as claimed in claims 1-2, **characterized in that** the material of the supporting body is steel.
